(19) Europäisches Patentamt / European Patent Office / Office européen des brevets

(11) **EP 3 416 113 A1**

(12) **DEMANDE DE BREVET EUROPEEN**

(43) Date de publication:
**19.12.2018 Bulletin 2018/51**

(51) Int Cl.:
***G06Q 10/06*** *(2012.01)*

(21) Numéro de dépôt: **18176860.7**

(22) Date de dépôt: **08.06.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **12.06.2017 FR 1755229**

(71) Demandeur: **Electricité de France**
**75008 Paris (FR)**

(72) Inventeurs:
• **GIRARD, Alexandre**
  **92500 RUEIL-MALMAISON (FR)**
• **JICQUEL, Jean-Marc**
  **77250 Ecuelles (FR)**

(74) Mandataire: **Regimbeau**
**20, rue de Chazelles**
**75847 Paris Cedex 17 (FR)**

(54) **PROCÉDÉ DE TRAITEMENT DE DONNÉES DE LA COURBE DE CHARGE**

(57) L'invention porte sur un procédé de traitement (E) d'une information relative à la consommation énergétique d'une installation électrique (2) comprenant :
• un ensemble d'appareils électriques (3, 4) de différents types, correspondant à différents usages électriques (3, 4),
• un boîtier de communication (5) configuré pour échanger des informations avec un serveur distant (6) comprenant des moyens de traitement (60),
le procédé (E) comprenant les étapes de :
• recueil (E1) d'une information relative à la consommation de l'installation électrique (2), à un premier pas de temps (T1),
• transmission (E2) de l'information au serveur distant (6),
• traitement (E3) de l'information, et
• restitution (E4) d'une information relative à la consommation de chacun des usages électriques (3, 4) de l'installation électrique (2) à partir de la classification (E34) établie lors de l'étape de traitement (E3),
les étapes de recueil (E1) et de transmission (E2) étant mises en oeuvre par le boîtier de communication (5), l'étape de traitement (E3) étant mise en oeuvre par les moyens de traitement (60) du serveur distant (6).

**FIG. 1**

EP 3 416 113 A1

**Description**

DOMAINE TECHNIQUE

L'invention concerne le traitement et l'analyse de la consommation énergétique d'une installation électrique comprenant plusieurs types d'usages électriques.

L'invention vise plus spécifiquement les procédés de traitement de la puissance consommée par différents appareils électriques alimentés sur un même réseau.

ETAT DE LA TECHNIQUE

La capacité à surveiller la consommation énergétique d'une installation électrique revêt une importance croissante pour les professionnels comme pour les particuliers. Le consommateur cherche en effet à connaître de plus en plus en détails la puissance électrique consommée par chacun des appareils qu'il utilise. Il est ainsi en mesure de mieux maîtriser sa facture énergétique.

Actuellement, le relevé de la consommation énergétique d'une installation passe majoritairement par la pose d'un ou plusieurs compteurs qui peuvent être de différents types. Un premier exemple de compteurs enregistre en permanence la puissance consommée par l'installation électrique à laquelle il est relié. Ce type de compteur doit alors être relevé régulièrement par un professionnel. Un deuxième exemple de compteurs est relié à un serveur distant auquel il fait parvenir régulièrement une information liée à l'énergie consommée, par exemple une impulsion tous les kWh.

Ce type de surveillance est néanmoins problématique. En effet, il ne donne accès qu'à une information liée à la consommation de l'ensemble des appareils, reliés en série, auquel il est branché. Par conséquent, une connaissance détaillée nécessite de poser autant de compteurs qu'il y a d'usages électriques, ou de groupes d'usages électriques, dans une installation. En outre, la pose d'un compteur nécessite de couper le courant dans toute l'installation, et de faire intervenir un professionnel habilité.

Pour faire face à ces problèmes et répondre à une demande d'un niveau de connaissances de la consommation qui soit toujours plus fin, plusieurs solutions ont été proposées.

Une première solution consiste à relever la courbe de puissance instantanée d'une installation électrique complète, à la désagréger en niveaux de puissance successifs à un pas donné, de l'ordre de la milliseconde, et à en déduire des signatures d'appareils électriques donnés en fonction de schémas d'évolution des niveaux de puissance, ou de forme d'ondes, se répétant. Par la suite, ces signatures électriques sont stockées dans une bibliothèque, et comparées à toute nouvelle courbe de consommation relevée, afin de déterminer les appareils impliqués dans cette consommation.

Une deuxième solution consiste à relever la courbe de puissance instantanée d'une installation électrique complète, à la binariser en fonction de ses variations positives ou négatives, et à allouer chaque portion de courbe binarisée à un type de consommation au moyen de critères prédéfinis. Cette allocation se base notamment sur une étape d'apprentissage statistique mettant à jour ces critères.

Outre leur complexité de mise en oeuvre, ces solutions nécessitent la pose d'une ou plusieurs pinces de prise de puissance dans les armoires électriques d'installation. Comme pour les solutions précédentes, ceci présente l'inconvénient de devoir couper le courant et faire appel à un professionnel habilité. En outre, les informations relevées sont stockées sur une carte mémoire et transmises via des canaux de communication haut-débit, ce qui peut s'avérer coûteux pour l'usager.

Il existe donc un besoin de procédé de traitement de la consommation énergétique d'une installation électrique qui ne soit pas mis en oeuvre par des dispositifs coûteux, tout en fournissant une information relative à la consommation énergétique de chacun des types d'appareils appartenant à l'installation.

RESUME DE L'INVENTION

Un but de l'invention est de fournir la puissance consommée par plusieurs types d'appareils électriques alimentés à partir d'un même réseau, sans avoir à modifier l'installation électrique reliant ces appareils.

Un autre but de l'invention est de fournir une information relative à la consommation énergétique de chacun des usages électriques, ou groupes d'usages électriques d'une installation électrique, à partir de la consommation énergétique globale de l'installation électrique.

Un autre but de l'invention est de traiter la consommation énergétique d'une installation électrique à l'aide d'un réseau de communication bas débit, avec une faible bande passante.

Un autre but de l'invention est de pouvoir intégrer au traitement de la consommation énergétique d'une installation électrique, des informations reçues de la part de dispositifs de mesure de l'activité de ladite installation.

Un autre but de l'invention est de proposer un procédé de traitement de la consommation énergétique d'une installation électrique industrielle comme domestique.

L'invention propose notamment un procédé de traitement d'une information relative à la consommation énergétique d'une installation électrique comprenant :

- un ensemble d'appareils électriques de différents types, correspondant à différents usages électriques,
- un boîtier de communication configuré pour échanger des informations avec un serveur distant comprenant des moyens de traitement,

le procédé comprenant les étapes de :

- recueil d'une information relative à la consommation de l'installation électrique, à un premier pas de temps,
- transmission de l'information au serveur distant,
- traitement de l'information, l'étape de traitement comprenant les sous-étapes de :

  ○ génération d'un chronogramme de la consommation énergétique à partir de l'information transmise,
  ○ décomposition du chronogramme généré en blocs de consommation énergétique,
  ○ sélection des blocs les plus significatifs,
  ○ classification des blocs sélectionnées, et

- restitution d'une information relative à la consommation de chacun des usages électriques de l'installation électrique à partir de la classification établie lors de l'étape de traitement,

les étapes de recueil et de transmission étant mises en oeuvre par le boîtier de communication, l'étape de traitement étant mise en oeuvre par les moyens de traitement du serveur distant.

Grâce à la décomposition en blocs du chronogramme de consommation énergétique d'une installation électrique, il devient possible d'identifier les différents usages électriques représentés dans la courbe de charge de l'installation. Par une sélection et une classification appropriées de ces blocs, un tel procédé permet de distinguer les consommations énergétiques des différents appareils électriques composant l'installation, sans avoir à doter chacun de ces appareils d'un compteur attitré.

Le procédé selon l'invention peut en outre comprendre les caractéristiques suivantes :

- le premier pas de temps est compris entre une et dix minutes,
- le boîtier de communication comprend en outre un dispositif de stockage de l'information recueillie, l'information étant transmise à un deuxième pas de temps, supérieur au premier pas de temps, de préférence compris entre un jour et une semaine,
- l'étape de traitement est mise en oeuvre à un troisième pas de temps, supérieur au premier pas de temps, de préférence compris entre quinze jours et un mois,
- l'information relative à la consommation énergétique comprend la valeur de la puissance réactive consommée par l'installation électrique,
- l'information relative à la consommation énergétique comprend la valeur de la puissance active consommée par l'installation électrique,
- l'information relative à la consommation énergétique comprend la valeur de la puissance consommée par l'installation électrique, l'étape de traitement comprenant en outre une sous-étape d'identification de la composante réactive et de la composante active de la puissance consommée, les sous-étapes de génération, de décomposition, de sélection et de classification étant menées respectivement sur chacune de ces composantes.
- l'installation électrique comprend en outre un ensemble de capteurs reliés à tout ou partie des appareils électriques, les capteurs étant configurés pour mesurer un instant de démarrage et/ou d'arrêt des appareils électriques, une information relative aux instants de démarrage et/ou d'arrêt des appareils électriques étant également recueillie, puis transmise, la classification des blocs sélectionnés étant mises en oeuvre également à partir de cette information.
- l'information relative à la consommation énergétique comprend la puissance instantanée consommée par l'installation électrique et, lors de l'étape de traitement de l'information,

  ○ le chronogramme de la consommation énergétique est généré par agrégation de toutes les valeurs de puissance transmises depuis le dernier traitement, puis traité de sorte à récupérer un profil de puissance en escalier, avant d'être séparé en blocs de puissance stockés sous la forme d'une matrice par jour avec les premiers pas de temps en ligne et les différents blocs de puissance en colonnes,
  ○ les blocs de puissance sont sélectionnés en :

    ■ classant la matrice des blocs de puissance pour chaque jour par instants de démarrage croissants,

- effectuant une somme cumulée des blocs de puissance,
- concaténant l'ensemble des matrices journalières cumulées pour tous les jours considérés,
- regroupant les différents blocs en s'appuyant sur leur amplitude dans des matrices journalières qui sont ensuite concaténées verticalement en une matrice réduite,
- générant une matrice différenciée à partir de la matrice réduite,
- identifiant les puissances significatives au sein de la matrice différenciée en ne conservant que les centres de classe d'occurrence non nulle,

  ◦ les blocs de puissance les plus significatifs identifiés sont classés en :

- distinguant les centres de classes d'indice inférieur à un indice de référence de ceux qui leurs sont supérieurs, puis en stockant le nombre de colonnes correspondant à chacun de ces indices dans un vecteur d'occurrences,
- générant une matrice binaire à partir du vecteur d'occurrences,
- multipliant la matrice binaire par le centre de classe afin d'obtenir une matrice de puissance, et en
- réduisant la matrice de puissance de sorte à obtenir une matrice de décomposition en blocs de puissance associés à chaque usage électrique de l'installation électrique.

L'invention porte également sur dispositif de traitement d'une information relative à la consommation énergétique d'une installation électrique comprenant un ensemble d'appareils électriques de différents types, correspondant à différents usages électriques, le dispositif comprenant :

- un serveur distant comprenant des moyens de traitement,
- un boîtier de communication disposé à l'entrée de l'installation électrique et configuré pour échanger des informations avec le serveur distant,

le dispositif étant configuré pour mettre en oeuvre un procédé de traitement tel que précédemment décrit.

DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :

- La figure 1 illustre un exemple de dispositif de traitement d'une information relative à la consommation énergétique d'une installation électrique conforme à l'invention, et
- La figure 2 est un organigramme représentant différentes étapes d'un exemple de réalisation du procédé de traitement d'une information relative à la consommation énergétique d'une installation électrique conforme à l'invention.

DESCRIPTION DETAILLEE DE L'INVENTION

On va maintenant décrire un procédé de traitement E d'une information relative à la consommation énergétique d'une installation électrique 2.

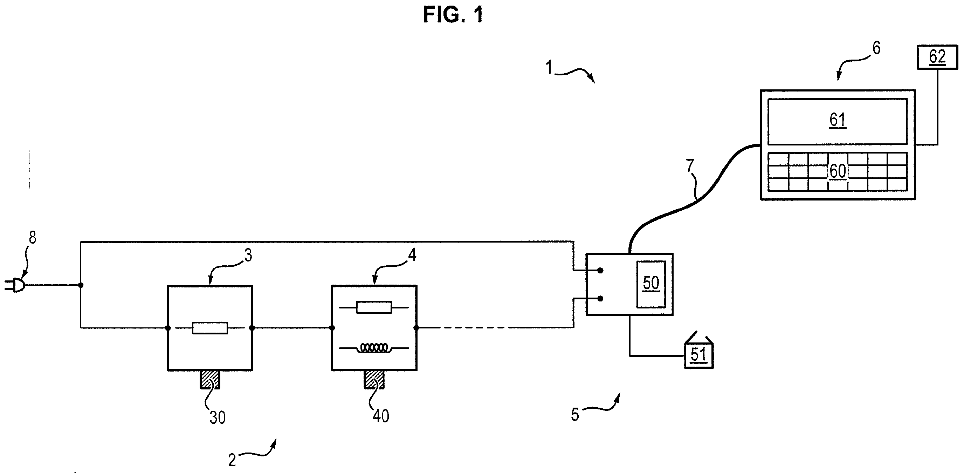

En référence à la figure 1, l'installation électrique 2 comprend un ensemble d'appareils électriques 3, 4, de différents types 3, 4, chaque type correspondant à un usage électrique 3, 4 donné. Par « type d'appareil » on entend distinguer des appareils dont le fonctionnement consomme seulement de la puissance électrique active, par exemple les appareils résistifs 3 tels qu'un radiateur, des appareils consommant à la fois de la puissance électrique active et réactive, par exemple les appareils inductifs 4 tels qu'un moteur. Ces appareils 3, 4 se distinguent également par leur nombre et leur taille au sein d'une même installation.

Un boîtier de communication 5 est disposé à l'entrée de l'installation électrique 2. Ce boîtier 5 est configuré pour recueillir une information relative à la consommation énergétique globale de l'installation électrique 2, à un premier pas de temps T1.
Avantageusement cette information comprend la puissance instantanée P consommée par l'installation électrique 2 au moment du recueil. De manière encore plus avantageuse, la puissance P consommée est décomposée en puissance active Pa et puissance réactive Pr. Alternativement, cette information comprend uniquement la puissance active Pa consommée.
Avantageusement, le premier pas de temps T1 est compris entre une et dix minutes. De manière préférentielle, le premier pas de temps T1 vaut dix minutes. Ce pas de temps T1 long permet de recueillir une information légère, et facilement stockable et/ou transmissible.

Ce boîtier 5 est par ailleurs configuré pour transmettre l'information recueillie à un serveur distant 6 par l'intermédiaire d'un canal de communication 7. Avantageusement, ce canal de communication 7 possède une bande passante faible, et un débit faible ; par exemple le boîtier 5 établit une communication de type Wifi avec le serveur distant 6. Alternativement, la connexion 7 entre le boîtier de communication 5 et le serveur distant 6 se fait à un débit élevé. Avantageusement, le boîtier 5 comprend un dispositif de stockage 50 de l'information. Dans ce cas, l'information recueillie peut ne pas être directement transmise au serveur distant 6, mais être d'abord stockée. L'ensemble de l'information stockée peut alors être transmise à un second pas de temps T2, supérieur au premier pas de temps T1, par exemple tous les jours, ou toutes les semaines. Alternativement, l'information peut être transmise sur requête du serveur distant 6.

Le boîtier 5 comprend également une batterie d'alimentation 51, avantageusement de longue durée, par exemple de cinq ans. Ceci présente l'avantage de rendre le boîtier 5 autonome, mais aussi de pouvoir mettre en oeuvre le procédé de traitement E durant une longue période.

Avantageusement, le boîtier 5 est en outre configuré pour recevoir une information relative au démarrage et/ou à l'arrêt des appareils électriques 3, 4 de l'installation. De manière privilégiée, cette information est de type « tout ou rien », et provient de capteurs 30, 40 disposés sur tout ou partie des appareils 3, 4. Ces capteurs 30, 40 peuvent par exemple mesurer une information relative à la température d'un appareil 3, 4, ou à ses vibrations. Ils en déduisent un instant de démarrage et d'arrêt de l'appareil 3, 4 qu'ils transmettent au boîtier de communication 5, en général sous forme binaire.

A titre d'exemple non limitatif, le boîtier de communication 5 utilise, pour récupérer les mesures de consommation, la sortie TIC (Télé-Information Client) du compteur général de consommation qui équipe les installations électriques professionnelles d'une puissance globale supérieure à 36 kW, via une liaison de type RJ45, et échange avec un serveur distant 6 via un protocole de communication type LORA.

Le serveur distant 6 peut soit être disposé à proximité de l'installation électrique 2, soit à distance. En tout état de cause, le serveur 6 comprend des moyens de traitement 60, par exemple un dispositif de calcul, et un dispositif de stockage 61 de l'information reçue de la part du boîtier de communication 5. Le dispositif de calcul 60 est configuré pour mener des étapes du procédé de traitement E, et communiquer le résultat de ces étapes à un utilisateur via une interface de restitution 62.

L'ensemble comprenant le boîtier de communication 5 relié au serveur distant 6 constitue un dispositif de traitement 1 d'une information relative à la consommation énergétique d'une installation électrique 2 à laquelle ledit dispositif 1 est relié. Ce dispositif de traitement 1 présente l'avantage de ne pas être intrusif, contrairement aux dispositifs de l'art antérieur. Par conséquent, l'intervention sur le tableau électrique de l'installation électrique 2 et la coupure de courant ne sont plus nécessaires. En outre, il s'agit d'un dispositif 1 plus simple et moins coûteux que les pinces de prises de puissance, ou les compteurs encodeurs. Par ailleurs, ce dispositif 1 est très simple à mettre en oeuvre. Une fois branché à l'entrée de l'installation électrique 2, le boîtier de communication 5 peut recueillir et transmettre l'information relative à la consommation énergétique dès que la connexion 7 au serveur distant 6 a été établie. Enfin, ce type de dispositif 1 est déjà relativement répandu dans les installations électriques 2 de particuliers ou de professionnels, à des fins de relevés de facturation.

En tout état de cause, l'information relative à la consommation énergétique recueillie aux bornes d'un type d'appareil 3 est très différente de celle recueillie aux bornes d'un autre type d'appareil 4. Cependant, ces appareils 3, 4 étant tous reliés entre eux en vue d'une alimentation par un réseau commun 8, l'information accessible aux bornes de l'installation électrique globale 2 prend une forme qui ne permet pas de distinguer les consommations particulières de chaque type d'appareil 3, 4, ou groupe d'usages 3, 4.

Le boîtier de communication 5 recueille donc une information correspondant à la consommation énergétique de toute l'installation électrique 2. Cette information transmise au serveur distant 6 doit donc être traitée plus en profondeur, afin de fournir à un utilisateur une information relative à la consommation énergétique de chacun des usages ou groupes d'usages 3, 4 appartenant à l'installation électrique 2.

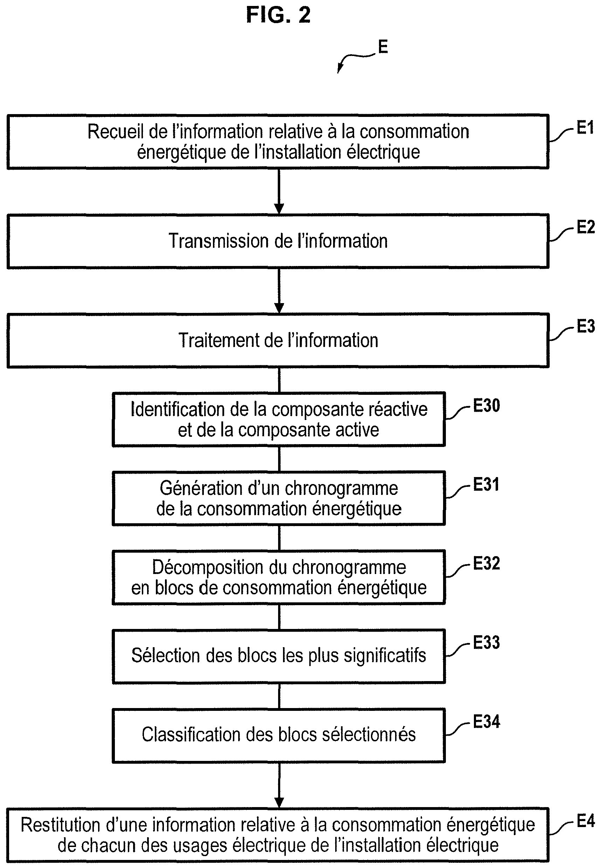

En référence à la figure 2, un procédé de traitement E d'une information relative à la consommation énergétique d'une installation électrique 2 comprenant plusieurs usages électriques 3, 4, comprend une première étape E1 de recueil de l'information relative à la consommation, à un premier pas de temps T1. Lors d'une deuxième étape E2, cette information est transmise. Puis, lors d'une troisième étape E3, cette information est traitée afin de restituer, lors d'une quatrième étape E4, une information relative à la consommation énergétique de chaque usage électrique 3, 4 de l'installation électrique 2.

De manière privilégiée, la première E1 et la deuxième étape E2 sont mises en oeuvre par le boîtier de communication 5, tandis que la troisième E3 et la quatrième étape E4 sont mises en oeuvre par les moyens de traitement 60 du serveur distant 6.

Avantageusement, les trois premières étapes E1, E2, E3 du procédé E sont chacune mises en oeuvre à un pas de temps T donné :

- le recueil E1 est mis en oeuvre à un premier pas de temps T1, compris entre une et dix minutes, de préférence dix minutes,

- la transmission E2 est mise en oeuvre à un deuxième pas de temps T2, supérieur au premier pas de temps T1, et
- le traitement E3 est mis en oeuvre à un troisième pas de temps T3, supérieur au premier T1 et au deuxième pas de temps T2.

De manière privilégiée, le deuxième pas de temps T2 est égal au premier pas de temps T1, de sorte à ce que l'information soit transmise au fur et à mesure du recueil. Alternativement, l'information recueillie est d'abord stockée, puis transmise au deuxième pas de temps T2. Dans ce cas, toute l'information recueillie depuis la dernière transmission, est transmise. De manière privilégiée ce deuxième pas de temps T2 est compris entre un jour et une semaine.

De manière également privilégiée, le troisième pas de temps T3 est grand devant le premier pas de temps T1. Ainsi, le traitement est mis en oeuvre sur une quantité importante d'information recueillie, de sorte à pouvoir restituer l'évolution de la consommation énergétique de chaque usage électrique 3, 4 au cours du temps. Avantageusement, le troisième pas de temps T3 est compris entre quinze jours, pour traiter un volume d'information suffisant, et un mois, pour caractériser un profil saisonnier de consommation énergétique, c'est-à-dire une période où les variations de la consommation dues au chauffage sont faibles.

Comme visible sur la figure 2, l'étape de traitement de l'information E3 comprend des sous-étapes E31, E32, E33, E34 également mises en oeuvre par le serveur distant 6.

Lors d'une première sous-étape E31, un chronogramme de la consommation énergétique est généré.

Lors d'une deuxième sous-étape E32, le chronogramme est décomposé en blocs de consommation énergétique.

Lors d'une troisième sous-étape E33, des blocs les plus significatifs sont sélectionnés parmi les blocs générés lors de la deuxième sous-étape E32.

Lors d'une quatrième étape E34, ces blocs sélectionnés sont classés.

Ces sous-étapes E31, E32, E33, E34 permettent d'identifier les consommations des différents appareils électriques 3, 4 à partir des blocs de consommation de l'installation électrique 2. A la suite de ces sous-étapes de traitement E31, E32, E33, E34, il est possible de retracer la consommation électrique de chaque type d'usage 3, 4, sur la période de traitement, à partir de la classification établie.

Différents modes de réalisation de l'étape de traitement E3 de l'information d'un procédé de traitement E d'une information relative à la consommation énergétique d'une installation électrique 2 vont maintenant être décrits, en fonction de l'information à traiter. Cette information est recueillie par un boîtier de communication 5, puis transmise à un serveur distant 6 qui met alors en oeuvre l'étape de traitement E3 de cette information. Cette étape de traitement E3 a pour objectif de décomposer la consommation énergétique brute recueillie en blocs de consommation, en identifiant les répétitions, sur plusieurs jours, des appels de puissance des différents usages 3, 4. Ceci permet avantageusement de s'affranchir des variations de puissance parasites, telles que celles des usages thermosensibles.

Dans un premier mode de réalisation, l'information à traiter comprend la puissance instantanée P consommée par l'installation électrique 2, cette puissance P étant décomposée en puissance active Pa et puissance réactive Pr, les sous-étapes de traitement E31, E32, E33, E34 étant menées respectivement sur chacune des composantes Pa, Pr, en parallèle, ou successivement. Dans la suite on utilise le terme « puissance » pour décrire l'une ou l'autre des composantes active Pa ou réactive Pr de la puissance instantanée P consommé par l'installation électrique.

Lors de la première sous-étape E31, le chronogramme de la consommation énergétique est généré par agrégation de toutes les valeurs de puissance P transmises depuis le dernier traitement. Ce chronogramme fournit, de fait, la courbe de charge de l'installation électrique 2.

En vue de la deuxième sous-étape de décomposition E32, le chronogramme est traité de sorte à récupérer un profil de puissance P en escalier pour lequel il est plus aisé de détecter des appels de puissance P, en séparant variations à la hausse et variations à la baisse.

Le chronogramme en escalier est généré par recherche des maxima d'un histogramme généré à partir des valeurs du chronogramme initial, puis par approximation d'un point de la courbe de charge en utilisant le maximum de puissance P le plus proche du point considéré.

Avantageusement, cette génération est mise en oeuvre par un stockage des valeurs successives de puissance P dans une matrice $M0$ avec les pas de temps $T1_i$ de recueil en ligne et les jours $j$ de recueil en colonne. Un calcul de dérivée en valeur absolue par filtrage morphologique est alors mis en oeuvre sur tous les points de la matrice $M0$, c'est-à-dire par soustraction d'une érosion sur trois points à une dilatation sur trois points, mise en oeuvre sur toute la courbe de charge. A partir de cette dérivée morphologique, des alignements dominants sont recherchés en sommant par ligne des signaux logiques de dépassement par la dérivée d'un seuil d'un demi-écart-type de la dérivée. On obtient ainsi un signal à une dimension sur lequel les pics significatifs correspondant à plus de la moitié de la période considérée, c'est-à-dire les maxima les plus importants de ce signal, sont cherchés. Les emplacements de ces pics significatifs donnent les instants possibles d'appel de puissance/extinction d'un usage électrique 3, 4. Une approximation de la courbe de charge est alors calculée en prenant la moyenne de la courbe de charge entre deux instants possibles de changement de puissance P, ce qui fournit le profil de consommation en escalier.

Lors de la deuxième sous-étape E32, le chronogramme est séparé en blocs de puissance. Cette deuxième étape de traitement E32 se base sur l'hypothèse que, dans une séquence de variations croissantes de puissance P suivies de variations décroissantes, le dernier bloc de puissance P démarré est le premier bloc de puissance P éteint. L'amplitude du bloc de puissance P est calculée comme le minimum des valeurs absolues des amplitudes associées aux instants d'appel de puissance/extinction d'un usage électrique 3, 4. C'est démarche itérative élimine progressivement les instants de variation dès que les amplitudes associées après soustraction du bloc de puissance P sont nulles. Avantageusement, cette décomposition est stockée sous la forme d'une matrice $M1$ par jour avec les premiers pas de temps $T1_i$ en ligne et les différents blocs de puissance P en colonnes. Dans une telle matrice $M1$, la valeur d'une cellule correspond au niveau de puissance P appelé pour le pas de temps $T1_i$ et le bloc de puissance P considérés.

Lors de la troisième sous-étape E31, les blocs de puissance P les plus significatifs sont sélectionnés.

A cet égard, la matrice $M1$ des blocs de puissance P pour chaque jour est d'abord classée par instants de démarrage croissants. Comme les blocs obtenus à l'issue de la deuxième sous-étape sont déjà classés par instants d'arrêt croissants, ce tri organise directement les instants d'arrêt en ordre croissant pour un même instant de démarrage. On note $K(n)$ le nombre de blocs obtenus pour le jour $n$ et $R_{n,k}$ le $k$-ième bloc de la décomposition.

Puis, une somme cumulée des blocs $R_{n,k}$ est calculée, c'est-à-dire que le premier bloc $R_{n,1}$ est inchangé, puis que le deuxième bloc $R_{n,2}$ est sommé avec le premier bloc $R_{n,1}$ pour obtenir une nouvelle courbe, puis le troisième $R_{n,3}$ avec les deux précédents $R_{n,1}$, $R_{n,2}$ etc., ce qui forme une nouvelle matrice $C_n$ pour le jour $n$.

$$C_n = [C_{n.1} C_{n.2} \dots C_{n.K(n)}] = [R_{n.1} R_{n.1} + R_{n.2} \dots R_{n.1} + \dots + R_{n.K(n)}]$$

Ensuite, l'ensemble des matrices $C_n$ pour tous les jours considérés sont concaténées horizontalement dans une matrice $C_{tot} = \dots C_N]$ où $N$ désigne le nombre de jours de recueil de la puissance P traitée. Un premier vecteur $I_{jours}$ donnant les indices des jours dont chaque colonne est issue (le $n$ de $C_{n.k}$) et un deuxième vecteur $I_{col\_jours}$ donnant l'indice de la colonne dans la matrice journalière (le $k$ de $C_{n.k}$) sont créés.

Ces différents blocs sont alors regroupés en s'appuyant sur leur amplitude. Pour cela, un histogramme des maxima des valeurs par colonne de la matrice complète $C_{tot}$ est créé. Les maxima de cet histogramme permettent d'identifier les valeurs de puissance P qui permettent d'approcher l'ensemble de la courbe de charge. Pour cela, pour chaque instant, ce qui correspond à une ligne $i$ de $C_{tot}$, à chaque indice de colonne $j$, le $p$-ième maximum de l'histogramme est attribué le plus proche de la valeur dans $C_{tot}$ en $(i,j)$. Les indices de colonne $j$ correspondants sont stockés par ligne et par maximum dans un vecteur $S_{i.p}$. Puis, pour chaque jour et chaque instant $i$, sont extraits l'ensemble des indices des colonnes de $C_{tot}$ appartenant au jour considéré $j$ qui sont compatibles avec les maxima de l'histogramme présents à l'instant observé via le vecteur $I_{jours}$ associant les colonnes aux jours. Plus précisément, les indices $q$ tels que $I_{jours}(q)$ soit égal à $j$ sont cherchés dans les vecteurs $S_{i.p}$ pour sélectionner les p correspondants. Cette extraction est également mise en oeuvre en utilisant le vecteur $I_{col\_jours}$ pour transposer les indices de la matrice globale en indices de chaque matrice journalière.

Une matrice $C_{red.j}$, pour le jour $j$, avec les colonnes de $C_{tot}$ ainsi sélectionnées est ensuite générée. Les différentes matrices journalières réduites $C_{red.j}$ sont ensuite concaténées verticalement pour former une matrice $C_{red}$, possédant $K_{max}$ colonnes. Les matrices $C_{red.j}$ n'ayant pas toutes le même nombre de colonnes, elles sont complétées tant que de besoin par des colonnes de zéros. Enfin, une matrice $C_{diff}$ est générée en soustrayant une colonne de la matrice $C_{red}$ à la suivante :

$$C_{diff} = [C_{red}(.,1) C_{red}(.,2) - C_{red}(.,1) \dots C_{red}(.,K_{max}) - C_{red}(.,K_{max} - 1)]$$

Un nouvel histogramme est alors calculé pour identifier les puissances P des blocs significatifs jour par jour. A cet effet, seuls les centres de classe d'occurrence non nulle sont conservés.

Dans un premier temps, le dernier centre de classe de l'histogramme pour lequel le nombre d'occurrences est important est identifié, ce qui se traduit par la recherche du dernier centre de classe $ind\_bloc\_max$ dont le nombre d'occurrences est supérieur à 5% du nombre d'occurrences maximum. Puis, pour chaque centre de classe d'indice supérieur à $ind\_bloc\_max$, on calcule la différence $d$ entre ce centre de classe et celui de l'indice $ind\_bloc\_max$. On détermine alors quel est le centre de classe d'indice inférieur à celui de l'indice $ind\_bloc\_max$ qui est le plus proche de la différence $d$. On stocke l'indice correspondant et on soustrait le centre de classe à la différence $d$, ce qui fournit une nouvelle différence $d_i$. Si cette nouvelle différence $d_i$ est supérieure à la distance inter-classes de l'histogramme, alors on réitère la procédure. Ainsi, à chaque centre de classe d'indice supérieur $p$ à l'indice $ind\_bloc\_max$ est associé une liste $L_p$ d'au plus trois indices de centres de classe dont l'indice $ind\_bloc\_max$ systématiquement.

Lors de la quatrième sous-étape E34, les blocs de puissance P les plus significatifs sélectionnés sont classés.

A cet effet, les centres de classes inférieurs d'indice inférieur ou égal à l'indice $ind\_bloc\_max$ sont distingués de ceux qui leurs sont supérieurs. Pour les premiers, une hypothèse est qu'il est possible que des multiples de la puissance P correspondante puissent apparaître dans la courbe de puissance P totale, comme, par exemple, des sommes de puissances P de convecteurs, donc il faut créer des vecteurs de puissance P élémentaires permettant de traduire cette superposition. Pour les deuxièmes, l'hypothèse est que le bloc de puissance P va être présent de façon au plus unitaire, ce bloc étant constitué d'un à plusieurs blocs qui sont spécifiés dans la liste $L_p$ pour l'indice de centre de classe $p$.

Pour chaque centre de classe d'indice inférieur ou égal à l'indice *ind_bloc_max*, on détermine dans la matrice $C_{diff}$ par ligne le nombre de colonnes pour lesquelles les valeurs correspondantes dans la matrice $C_{diff}$ sont plus proches de ce centre de classe que des autres, tout ceci étant stocké dans un vecteur $N_{occ}$.

Ensuite, une matrice binaire $Bin_{occ}$ est créée, d'un nombre de colonnes correspondant au maximum du vecteur $N_{oce}$, dont chaque colonne va correspondre au fait que les valeurs du vecteur $N_{occ}$ soit supérieures ou non à l'indice de colonne. Cette matrice binaire $Bin_{occ}$ est alors multipliée par le centre de classe pour donner une matrice de puissance P. Puis, pour chaque centre de classe d'indice supérieur à l'indice *ind_bloc_max*, sont déterminés dans la matrice $C_{diff}$ par ligne le nombre de colonnes pour lesquelles les valeurs correspondantes dans la matrice $C_{diff}$ sont plus proches de ce centre de classe que des autres, tout ceci étant stocké dans le vecteur $N_{occ}$. Un vecteur binaire $B_{occ}$ est ensuite créé qui indique si les valeurs du vecteur $N_{occ}$ sont positives. La liste d'indices associée à chacun de ces indices est ensuite utilisée pour créer une matrice correspondant au produit matriciel du vecteur binaire $B_{occ}$ par le vecteur ligne des centres de classe. L'ensemble de ces matrices est stocké dans une matrice *Dec*.

Finalement, le nombre de colonnes de la matrice *Dec* est réduit en sommant les colonnes de la matrice *Dec* qui admettent la même valeur maximale. Cette dernière matrice $Dec_g$ définit la décomposition en blocs de puissance P associés à chaque usage électrique de l'installation électrique.

Dans un second mode de réalisation, l'information à traiter comprend uniquement la puissance instantanée P consommée par l'installation électrique.

Une sous-étape de traitement supplémentaire E30 est mise en oeuvre afin de distinguer la composante réactive Pr de la composante active Pa dans la puissance instantanée P transmise. Les sous-étapes de génération d'un chronogramme E31, de décomposition en blocs de consommation E32, de sélection de blocs significatifs E33 et de classification des blocs sélectionnés E34, sont ensuite mises en oeuvre sur chacune de ces composantes conformément au premier mode de réalisation.

La sous-étape d'identification E30 est mise en oeuvre par différence entre la puissance transmise P et un ensemble d'ouvertures morphologiques de supports croissants pour estimer quel est le support d'ouverture qui permet de maximiser la corrélation entre résidu et puissance réactive Pr. Il en résulte une séparation entre une puissance corrélée fortement à la puissance réactive Pr et une puissance résiduelle qui va contenir la part résistive Pa.

Dans un troisième mode de réalisation, une information relative aux instants de démarrage et/ou d'arrêt des appareils électriques 3, 4 est également recueillie, puis transmise.

La sous-étape de sélection de blocs significatifs E33 est alors mise en oeuvre également compte tenu de cette information supplémentaire, les autres sous-étapes de traitement E31, E32, E34 étant mises en oeuvre conformément au premier mode de réalisation.

En effet, une matrice *M*2 indiquant les couples d'instants de démarrage et/ou d'arrêt des appareils électriques 3, 4 est complétée selon le même processus itératif que lors de la sous-étape de génération E32 d'un chronogramme en escaliers du premier mode de réalisation. Cela permet de connaître parmi la combinatoire de ces instants lesquels sont utiles. Une famille de blocs significatifs est créée en utilisant ces couples d'instants. La consommation énergétique est alors classée à partir de cette famille de blocs significatifs, au moyen d'une méthode de corrélation par les moindres carrés à coefficients positifs.

En tout état de cause, à partir de la matrice $Dec_g$ de décomposition en blocs de puissance P associés à chaque usage électrique 3, 4 de l'installation électrique 2, il est possible de déterminer la consommation de chacun de ces usages 3, 4. Une information relative à cette consommation est alors restituée lors d'une quatrième étape du procédé E4. Cette restitution peut prendre n'importe quelle forme utile pour l'utilisateur.

Un tel procédé E peut être utilisé par un utilisateur afin d'identifier les différents postes de consommation énergétique au sein de son installation électrique 2. Cette identification peut notamment être utile à la réduction de la facture énergétique de l'utilisateur en ajustant ses différents usages électriques 3, 4.

Un tel procédé E peut également être utilisé par un fournisseur d'énergie afin d'adapter l'offre à chacun des utilisateurs reliés au réseau 8 qu'il approvisionne.

Un tel procédé E peut en outre être utilisé par un producteur d'énergie afin de programmer des ordres d'effacement de courbe de charge à des utilisateurs ayant donné leur accord dans ce sens.

**Revendications**

**1.** Procédé de traitement (E) d'une information relative à la consommation énergétique d'une installation électrique (2) comprenant :

• un ensemble d'appareils électriques (3, 4) de différents types, correspondant à différents usages électriques (3, 4),
• un boîtier de communication (5) configuré pour échanger des informations avec un serveur distant (6) comprenant des moyens de traitement (60),

le procédé (E) comprenant les étapes de :

• recueil (E1) d'une information relative à la consommation de l'installation électrique (2), à un premier pas de temps (T1),
• transmission (E2) de l'information au serveur distant (6),
• traitement (E3) de l'information, l'étape de traitement (E3) comprenant les sous-étapes de :

  ○ génération (E31) d'un chronogramme de la consommation énergétique à partir de l'information transmise,
  ○ décomposition (E32) du chronogramme généré en blocs de consommation énergétique,
  ○ sélection (E33) des blocs les plus significatifs,
  ○ classification (E34) des blocs sélectionnées, et

• restitution (E4) d'une information relative à la consommation de chacun des usages électriques (3, 4) de l'installation électrique (2) à partir de la classification (E34) établie lors de l'étape de traitement (E3),

les étapes de recueil (E1) et de transmission (E2) étant mises en oeuvre par le boîtier de communication (5), l'étape de traitement (E3) étant mise en oeuvre par les moyens de traitement (60) du serveur distant (6).

2. Procédé de traitement (E) selon la revendication 1, dans lequel le premier pas de temps (T1) est compris entre une et dix minutes.

3. Procédé de traitement (E) selon l'une des revendications 1 ou 2, dans lequel le boîtier de communication (5) comprend en outre un dispositif de stockage (50) de l'information recueillie, l'information étant transmise à un deuxième pas de temps (T2), supérieur au premier pas de temps (T1), de préférence compris entre un jour et une semaine.

4. Procédé de traitement (E) selon l'une des revendications 1 à 3, dans lequel l'étape de traitement (E3) est mise en oeuvre à un troisième pas de temps (T3), supérieur au premier pas de temps (T1), de préférence compris entre quinze jours et un mois.

5. Procédé de traitement (E) selon l'une des revendications 1 à 4, dans lequel l'information relative à la consommation énergétique comprend la valeur de la puissance réactive (Pr) consommée par l'installation électrique (2).

6. Procédé de traitement (E) selon l'une des revendications 1 à 5, dans lequel l'information relative à la consommation énergétique comprend la valeur de la puissance active (Pa) consommée par l'installation électrique (2).

7. Procédé de traitement (E) selon l'une des revendications 1 à 6, dans lequel l'information relative à la consommation énergétique comprend la valeur de la puissance (P) consommée par l'installation électrique (2), l'étape de traitement (E3) comprenant en outre une sous-étape d'identification (E30) de la composante réactive (Pr) et de la composante active (Pa) de la puissance (P) consommée, les sous-étapes de génération (E31), de décomposition (E32), de sélection (E33) et de classification (E34) étant menées respectivement sur chacune de ces composantes (Pr, Pa).

8. Procédé de traitement (E) selon l'une des revendications 1 à 7, dans lequel l'installation électrique (2) comprend en outre un ensemble de capteurs (30, 40) reliés à tout ou partie des appareils électriques (3, 4), les capteurs (30, 40) étant configurés pour mesurer un instant de démarrage et/ou d'arrêt des appareils électriques (3, 4), une information relative aux instants de démarrage et/ou d'arrêt des appareils électriques (3, 4) étant également recueillie, puis transmise, la classification (E34) des blocs sélectionnés étant mises en oeuvre également à partir de cette information.

9. Procédé de traitement (E) selon l'une des revendications 1 à 8, dans lequel l'information relative à la consommation énergétique comprend la puissance instantanée (P) consommée par l'installation électrique (2) et, lors de l'étape de traitement (E) de l'information,

• le chronogramme de la consommation énergétique est généré par agrégation de toutes les valeurs de puissance (P) transmises depuis le dernier traitement, puis traité de sorte à récupérer un profil de puissance (P) en escalier, avant d'être séparé en blocs de puissance (P) stockés sous la forme d'une matrice ($M1$) par jour avec les premiers pas de temps ($T1_i$) en ligne et les différents blocs de puissance (P) en colonnes,
• les blocs de puissance sont sélectionnés en :

◦ classant la matrice ($M1$) des blocs de puissance ($R_{n,k}$) pour chaque jour ($n$) par instants de démarrage croissants,
◦ effectuant une somme cumulée ($C_n$) des blocs de puissance ($R_{n,k}$)
◦ concaténant l'ensemble des matrices journalières ($C_1 ... C_N$) cumulées pour tous les jours (1 ... $N$) considérés,
◦ regroupant les différents blocs en s'appuyant sur leur amplitude dans des matrices journalières qui sont ensuite concaténées verticalement en une matrice réduite ($C_{red}$),
◦ générant une matrice différenciée ($C_{diff}$) à partir de la matrice réduite ($C_{red}$),
◦ identifiant les puissances significatives au sein de la matrice différenciée ($C_{diff}$) en ne conservant que les centres de classe d'occurrence non nulle,

• les blocs de puissance les plus significatifs identifiés sont classés en :

◦ distinguant les centres de classes d'indice inférieur à un indice de référence (*ind_bloc_max*) de ceux qui leurs sont supérieurs, puis en stockant le nombre de colonnes correspondant à chacun de ces indices dans un vecteur d'occurrences ($N_{occ}$),
◦ générant une matrice binaire ($Bin_{occ}$) à partir du vecteur d'occurrences ($N_{occ}$),
◦ multipliant la matrice binaire ($Bin_{occ}$) par le centre de classe afin d'obtenir une matrice de puissance ($Dec$), et en
◦ réduisant la matrice de puissance ($Dec$) de sorte à obtenir une matrice de décomposition ($Dec_g$) en blocs de puissance associés à chaque usage électrique (3, 4) de l'installation électrique (2).

10. Dispositif de traitement (1) d'une information relative à la consommation énergétique d'une installation électrique (2) comprenant un ensemble d'appareils électriques (3, 4) de différents types, correspondant à différents usages électriques (3, 4), le dispositif (1) comprenant :

• un serveur distant (6) comprenant des moyens de traitement (60),
• un boîtier de communication (5) disposé à l'entrée de l'installation électrique (2) et configuré pour échanger des informations avec le serveur distant (6),

le dispositif (1) étant configuré pour mettre en oeuvre un procédé de traitement (E) selon l'une quelconque des revendications précédentes.

# FIG. 1

# FIG. 2

E

| |
|---|
| Recueil de l'information relative à la consommation énergétique de l'installation électrique | E1 |
| Transmission de l'information | E2 |
| Traitement de l'information | E3 |

| | |
|---|---|
| Identification de la composante réactive et de la composante active | E30 |
| Génération d'un chronogramme de la consommation énergétique | E31 |
| Décomposition du chronogramme en blocs de consommation énergétique | E32 |
| Sélection des blocs les plus significatifs | E33 |
| Classification des blocs sélectionnés | E34 |

| |
|---|
| Restitution d'une information relative à la consommation énergétique de chacun des usages électrique de l'installation électrique | E4 |

Europäisches
Patentamt

European
Patent Office

Office européen
des brevets

## RAPPORT DE RECHERCHE EUROPEENNE

Numéro de la demande

EP 18 17 6860

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2011/089514 A2 (PANASONIC ELEC WORKS CO LTD [JP]; ODA TOMOHIRO [JP]; WANAKA TSUYOSHI []) 28 juillet 2011 (2011-07-28) * le document en entier * ----- | 1-10 | INV. G06Q10/06 |

DOMAINES TECHNIQUES RECHERCHES (IPC)

G06Q

Le présent rapport a été établi pour toutes les revendications

| Lieu de la recherche | Date d'achèvement de la recherche | Examinateur |
|---|---|---|
| Munich | 16 octobre 2018 | Hanon, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 17 6860

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-10-2018

| Document brevet cité au rapport de recherche | Date de publication | Membre(s) de la famille de brevet(s) | Date de publication |
|---|---|---|---|
| WO 2011089514 A2 | 28-07-2011 | JP 5491215 B2 | 14-05-2014 |
| | | JP 2011150650 A | 04-08-2011 |
| | | WO 2011089514 A2 | 28-07-2011 |

EPO FORM P0460

Pour tout renseignement concernant cette annexe : voir Journal Officiel de l'Office européen des brevets, No.12/82